# EUROPÄISCHE PATENTANMELDUNG

(11) **EP 1 354 615 A1**
(43) Veröffentlichungstag der Anmeldung: **22.10.2003**
(21) Anmeldenummer: 03006433.1
(22) Anmeldetag: 21.03.2003
(51) Int. Cl.: B01D 29/11

(54) **Filtereinrichtung mit einem Filterkörper und Verfahren zu dessen Reinigung**

(30) Priorität: 10.04.2002 DE 10215575
(71) Anmelder: Framatome ANP GmbH, 91058 Erlangen (DE)
(72) Erfinder: Kaffiné, Hans Werner, 60433 Frankfurt (DE); Rückbrodt, Karin, 65843 Sulzbach (DE)
(74) Vertreter: Walkenhorst, Andreas

(57) **Zusammenfassung**

Ein Verfahren zum Reinigen eines Filterkörpers (3) zum Filtern einer Flüssigkeit (F), der in einem Behälter (2) eine Einströmseite (4) von einer Ausströmseite (5) trennt, beinhaltet folgende Schritte:
- Die Zufuhr der Flüssigkeit (F) auf der Einströmseite (4) wird unterbrochen,
- die Einströmseite (4) des Behälters (2) wird entleert und belüftet, wobei die Ausströmseite (5) mit Flüssigkeit (F) gefüllt bleibt,
- der Druck auf der Ausströmseite (5) wird erhöht, so dass Flüssigkeit (F) von der Ausströmseite (5) durch den Filterkörper (3) in die zunächst gasgefüllte Einströmseite (4) strömt.

Das Verfahren gewährleistet eine effektive Filterreinigung und ermöglicht damit eine lange Filterbetriebsdauer.

## Beschreibung

Die Erfindung betrifft eine Filtereinrichtung mit einem Filterkörper zum Filtern einer Flüssigkeit, sowie ein Verfahren zu dessen Reinigung.

Ein als Filterkerze ausgebildeter Filterkörper ist beispielsweise aus der DE 34 07 433 A1 bekannt. Häufig sind mehrere Filterkerzen in einem Behälter angeordnet. Die zu filternde Flüssigkeit, beispielsweise Wasser, tritt in den Filterkörper vom Umfang her, d.h. von außen nach innen, ein. Die Filterkerze wird in der Regel in Abhängigkeit von der Verunreinigung der zu filternden Flüssigkeit mit abzuscheidenden Partikeln wiederholt gereinigt. Zur Reinigung der Filterkerze wird üblicherweise in dem Behälter auf der Reinflüssigkeitsseite ein Druckluftpolster geschaffen, während der größte Teil des Behälters, insbesondere die gesamte Rohflüssigkeitsseite, in die die Filterkerzen ragen, flüssigkeitsgefüllt bleibt. Mit Hilfe der Druckluft wird nun Flüssigkeit von der Reinflüssigkeitsseite durch die Filterkerzen auf die Rohflüssigkeitsseite gedrückt. Dabei wird die Druckluftzufuhr auf der Reinflüssigkeitsseite unterbrochen und anschließend mit Hilfe des im Behälter vorhandenen Druckluftpolsters der Filterkörper rückgespült. Zur Rückspülung wird dabei eine Armatur auf der Rohflüssigkeitsseite möglichst schlagartig geöffnet. Mit diesem gebräuchlichen Verfahren wird jedoch nur ein Teil der in den Filterkerzen festgehaltenen Partikel gelöst und auf die Reinflüssigkeitsseite geschwemmt. Aufgrund dieses nur eingeschränkten Reinigungseffektes bei einem derartigen Spülvorgang ergibt sich bei dem dem Spülvorgang folgenden Betriebszyklus ein schnellerer Anstieg des Differenzdrucks zwischen Rohflüssigkeits- und Reinflüssigkeitsseite als beim Betriebszyklus vor dem Spülvorgang. Die Filterkerze kann schließlich nach einer Anzahl Betriebszyklen nicht mehr durch Spülung so weit gereinigt werden, dass der Differenzdruck im Filterbetrieb nach dem Reinigungsvorgang auf einen ausreichend niedrigen Wert fällt und/oder ein ausreichend langsames Anstiegsverhalten mit zunehmender Betriebsdauer zeigt. In diesem Fall ist ein kostenintensiver, mit Entstehung von Abfall und gegebenenfalls einer Betriebsunterbrechung verbundener Austausch der Filterkerze erforderlich.

Der Erfindung liegt die Aufgabe zugrunde, eine Filtereinrichtung mit einem Filterkörper sowie ein Verfahren zu dessen Reinigung anzugeben, die eine besonders lange Filterbetriebsdauer ermöglichen.

Diese Aufgabe wird bezüglich des Verfahrens erfindungsgemäß gelöst durch ein Verfahren zum Reinigen eines Filterkörpers mit den Merkmalen des Anspruches 1. Hierbei wird vor der Filterreinigung zunächst die Flüssigkeitszufuhr zum in einem Behälter angeordneten Filterkörper abgesperrt. Anschließend wird der Behälter auf der Einströmseite des Filters entleert und belüftet. Nach der Entleerung ist die Flüssigkeit zumindest von der Oberfläche des Filterkörpers auf der Einströmseite weitgehend entfernt. Darüber hinaus gehende etwaige Flüssigkeitsreste, etwa am vom Filterkörper beanstandenden Boden des Behälters, sind für die Durchführung des Verfahrens ohne Bedeutung. Die Ausströmseite des Behälters bleibt vor Beginn des eigentlichen Reinigungs- oder Rückspülvorgangs flüssigkeitsgefüllt. Dabei bedeckt die Flüssigkeitsfüllung zumindest die Oberfläche des Filterkörpers. Bevorzugt ist die Ausströmseite des Behälters vollständig flüssigkeitsgefüllt, das heißt ohne Gaspolster. Zur Reinigung des Filterkörpers wird schließlich, bevorzugt mittels Druckluft, der Druck auf der Ausströmseite erhöht. Die Flüssigkeit strömt damit von der Ausströmseite durch den Filterkörper auf die luftgefüllte Einströmseite. Anstelle von Druckluft zum Rückspülen sowie Luft zum Belüften der Einströmseite kann, insbesondere in Abhängigkeit von der zu filternden Flüssigkeit, ein anderes geeignetes Gas, beispielsweise ein Inertgas, verwendet werden. Der Begriff "Druckluft" ist in diesem Sinne im Folgenden allgemein als "Druckgas", die Begriffe "Belüften" und "Entlüften" als "Befüllen mit einem Gas" bzw. "Entleeren eines Gases" zu verstehen.

Die Erfindung geht von der Überlegung aus, dass der Reinigungseffekt beim Spülen eines Filterkörpers umso besser ist, je größer die Druckdifferenz am Filterkörper ist. Beim herkömmlichen Spülen eines Filters mit Flüssigkeit verteilt sich der Druckverlust der Flüssigkeit auf den gesamten Strömungsweg von der Ausström- zur Einströmseite. Nur ein Teil dieses Druckverlusts tritt am Filterkörper direkt auf, während beispielsweise Zu- und Ableitungen sowie andere Bauteile erheblich zum Druckverlust beitragen. Im Fall einer impulsartigen Druckeinbringung mittels Druckluft spielt auch die Trägheit der Flüssigkeit eine wesentliche Rolle. Die Strömungsgeschwindigkeit der durch den Filterkörper strömenden Flüssigkeit ist durch die Masse und das Volumen der insgesamt beim Spülvorgang zu verdrängenden Flüssigkeit begrenzt. Insbesondere baut sich während des Spülvorgangs auf der Einströmseite des Filterkörpers ein Gegendruck in der Flüssigkeit auf, der dem zur Filterreinigung genutzten Druckgefälle zwischen Ausströmund Einströmseite des Filterkörpers entgegenwirkt.

Dagegen wird beim erfindungsgemäßen Verfahren der bei der Filterspülung an der Ausströmseite des Filterkörpers anstehende Druck voll zur Filterreinigung genutzt. An der Einströmseite des Filterkörpers befindet sich bei Beginn des Spülvorgangs zunächst Luft unter atmosphärischem Druck, so dass sich beim Spülen die von der Ausströmseite durch den Filterkörper gedrückte Flüssigkeit auf der Einströmseite frei ausbreiten kann. Ein geringfügiger Flüssigkeitsdurchtritt zwischen Ausström- und Einströmseite vor Beginn des Spülvorgangs ist unbedeutend, soweit die Einströmseite im Wesentlichen luftgefüllt ist.

Vorteilhafterweise ist vor Beginn des Spülvorgangs, insbesondere während der Entlüftung der Einströmseite, der Flüssigkeitsdruck auf der Ausströmseite auf den durch die Gewichtskraft der Flüssigkeit entstehenden Druck beschränkt. Indem die Flüssigkeit auf der Ausströmseite des Filterkörpers somit im Wesentlichen drucklos ansteht, ist ein unbeabsichtigtes Durchströmen des Filterkörpers von der Ausström- zur Einströmseite vor Beginn des Spülvorgangs zumindest auf ein unbedeutendes Maß reduziert. Der geringfügige Überdruck der Flüssigkeit auf der Ausströmseite des Filterkörpers kann durch eine oberhalb des Filterkörpers im Behälter angeordnete Flüssigkeitssäule oder beispielsweise durch eine Flüssigkeitssäule in einer mit der Ausströmseite des Behälters verbundenen Leitung erzeugt sein. Bevorzugt ist der Behälter im Filterbetrieb im Wesentlichen von unten nach oben und im Rückspülbetrieb von oben nach unten durchströmt.

Die den Spülvorgang bewirkende Druckerhöhung auf der Ausströmseite erfolgt bevorzugt impulsartig, vorzugsweise durch einen Druckluftimpuls. Durch die impulsartige Druckeinbringung ist eine bessere Reinigungswirkung erzielbar als im Fall einer gleichmäßigen Flüssigkeitsströmung mit relativ geringer Strömungsgeschwindigkeit. Die Effektivität der Einbringung eines Druckluftimpulses in die Flüssigkeit ist besonders hoch, wenn zuvor kein Luftpolster auf der Ausströmseite des Behälters vorhanden war, da ein solches den Druckluftimpuls dämpfen würde. Besonders bedeutsam für eine gute Reinigungswirkung bei der Rückspülung ist ein steiler Anstieg des Druckluftimpulses. Die Dauer des Druckluftimpulses kann insbesondere in Abhängigkeit vom maximalen Massenstrom durch den Filterkörper sowie von den Flüssigkeits- und Gasvolumina im Behälter variiert werden.

Bezüglich der Vorrichtung wird die Aufgabe erfindungsgemäß gelöst durch eine Filtereinrichtung mit den Merkmalen des Anspruchs 5. Bevorzugte Ausgestaltungen und Weiterbildungen sind Gegenstand der auf diesen zurückbezogenen Unteransprüche. Die im Zusammenhang mit dem Verfahren genannten Vorteile sind entsprechend auch auf die Vorrichtung übertragbar.

Nachfolgend wird ein Ausführungsbeispiel der Erfindung anhand einer Zeichnung näher erläutert. Hierin zeigen:
- Fig. 1: eine Prinzipdarstellung einer Filtereinrichtung,
- Fig. 2: eine Filtereinrichtung mit Filterkerze, und
- Fig. 3: die Differenzdruck-Zeit-Abhängigkeit beim erfindungsgemäßen Verfahren sowie bei einem Verfahren zur Filterreinigung nach dem Stand der Technik.

Einander entsprechende Teile sind in allen Figuren mit den gleichen Bezugszeichen versehen.

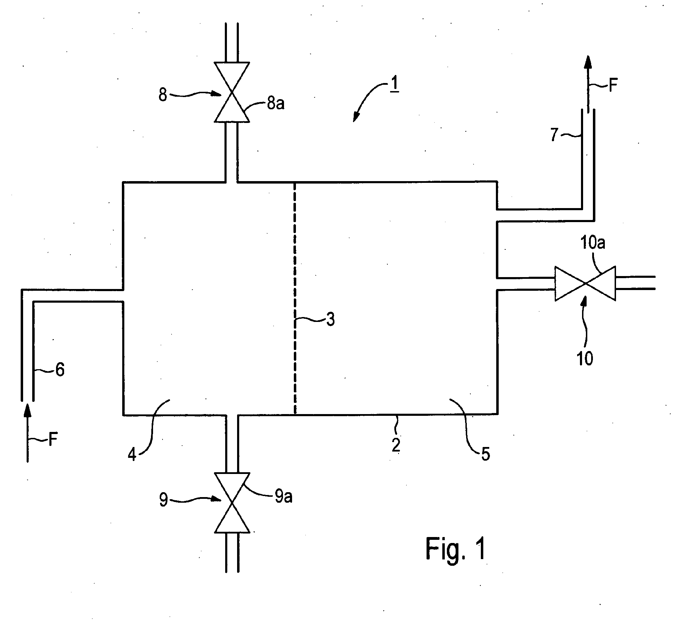

Fig. 1 zeigt eine Filtereinheit 1 mit einem in einem Behälter 2 angeordneten Filterkörper 3. Eine Flüssigkeit F strömt während des Filterbetriebs von einer Einströmseite 4 durch den Filterkörper 3 auf eine Ausströmseite 5. Die Flüssigkeit F wird dem Behälter 2 über eine Zulaufleitung 6 zugeführt und durch eine Ablaufleitung 7 aus diesem abgeführt. Am Behälter 2 sind an der Einströmseite 4 eine Belüftungseinrichtung 8 sowie eine Entleerungseinrichtung 9 vorgesehen. Auf der Ausströmseite 5 des Behälters 2 ist ein Druckgasanschluss 10 vorgesehen. Die Einströmseite 4 wird auch als Rohflüssigkeitsseite, die Ausströmseite 5 auch als Reinflüssigkeitsseite bezeichnet. Die Belüftungseinrichtung 8, die Entleerungseinrichtung 9 sowie der Druckgasanschluss 10 weisen jeweils eine Absperrarmatur 8a, 9a, 10a auf. Die Ablaufleitung 7 leitet die gefilterte Flüssigkeit F senkrecht nach oben weiter zu einem nicht dargestellten Apparat innerhalb eines geschlossenen Flüssigkeitskreislaufs.

Vor dem Reinigen oder Rückspülen des Filterkörpers 3 wird zunächst die auf der Einströmseite 4 des Behälters 2 befindliche Flüssigkeit F mit Hilfe der Entleerungsvorrichtung 9 sowie der Belüftungsvorrichtung 8 entleert. Nach der Entleerung wird die Belüftungseinrichtung 8 wieder geschlossen. Die Flüssigkeit F auf der Ausströmseite 5 verbleibt hierbei im Behälter 2. Der Flüssigkeitsstand in der Ablaufleitung 7 ist derart hoch, dass die Flüssigkeit F mit einem geringen Überdruck gegen die Ausströmseite 5 des Filterkörpers 3 gedrückt wird. Eine nicht dargestellte Absperrarmatur in der Ablaufleitung 7 wird geschlossen. Zwischen dieser Absperrarmatur und der ausströmseitigen Oberfläche des Filterkörpers 3 ist im gesamten ausströmseitigen Bereich des Behälters 2 kein Gaspolster ausgebildet. Anschließend wird auf der Ausströmseite 5 die Flüssigkeit F über den Druckgasanschluss 10 mit einem Druckgasimpuls, insbesondere Druckluftimpuls, beaufschlagt. Die Entleerungseinrichtung 9 ist hierbei geöffnet. Da die Einströmseite 4 des Behälters 2 ausschließlich oder überwiegend mit atmosphärischer Luft gefüllt ist, fällt praktisch der gesamte, sich aufgrund des Druckgasimpuls in der Flüssigkeit F auf der Ausströmseite 5 ausbreitende Überdruck direkt am Filterkörper 3 ab. Auf diese Weise wird eine sehr gute Reinigungswirkung erzielt.

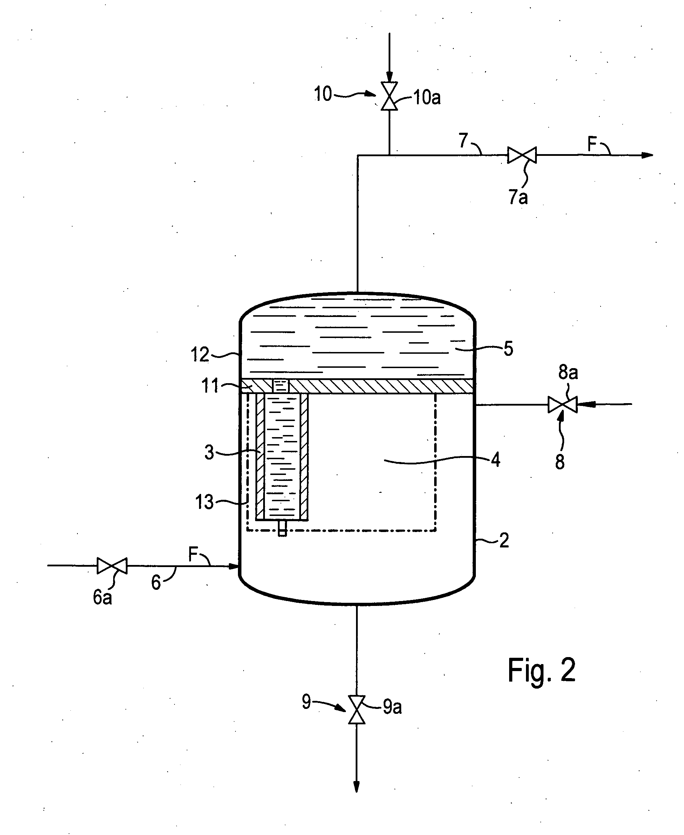

Fig. 2 zeigt eine Filtereinrichtung 1 mit einer Filterkerze 3 als Filterkörper. Beispielhaft ist eine einzige als Faltkerze 3 ausgebildete Filterkerze dargestellt. Die Faltkerze 3 hat eine im Wesentlichen zylindrische Grundform, wobei ein flächiges Filtermaterial, beispielsweise ein Kunststoff- oder Papiervlies der Abscheidung von Partikeln aus der Flüssigkeit F dient. Das flächige Filtermaterial ist ― in Draufsicht auf die Filterkerze - etwa sternförmig gefaltet und in einen Ringraum in der Filterkerze eingebettet. Zur Abstützung des flächigen Filtermaterials ist eine Stützkonstruktion vorgesehen, die zwei koaxiale flüssigkeitsdurchlässige Mantelwände bildet, zwischen denen das Filtermaterial im Ringraum eingeschlossen ist.

Der Behälter 2 enthält eine Vielzahl, beispielsweise ca. 300, solcher Faltkerzen 3. Die Falt- oder Filterkerzen 3 sind hängend in einer den Querschnitt des Behälters 2 ausfüllenden Halteplatte 11 gehalten. In der Halteplatte 11 ist für jede Filterkerze 3 jeweils eine Öffnung vorgesehen. Jede Filterkerze 3 ist an deren Oberseite, an der Halteplatte 11, offen und an deren Unterseite geschlossen. Die zu filternde Flüssigkeit F durchströmt die Filterkerzen 3 von außen nach innen. Der oberhalb der Halteplatte 11 als Filterdom 12 ausgebildete Teil des Behälters 2 bildet zusammen mit dem Inneren der Faltkerzen 3 die Reinflüssigkeitsseite oder Ausströmseite 5. Der unterhalb der Halteplatte 11 angeordnete Teil des Behälters 2 bildet ― außerhalb des Filtermaterials der Faltkerzen 3 ― die Rohflüssigkeitsseite oder Einströmseite 4. Die Flüssigkeit F wird dem Behälter 2 auf der Einströmseite 4 seitlich über eine Absperrarmatur 6a zugeführt und durchströmt den Behälter 2 im Filterbetrieb im Wesentlichen von unten nach oben.

Vor dem auch als Reinigungs- oder Rückspülvorgang bezeichneten Spülvorgang ist die gesamte Ausströmseite 5 des Filterkessels oder Behälters 2 einschließlich der Faltkerzen 3 mit Flüssigkeit F, insbesondere Wasser, gefüllt. Aufgrund des geringen Flüssigkeitsdrucks, der feinporigen, insbesondere mikroporösen Ausbildung der Filterkerzen 3, sowie der Akkumulation von Partikeln an den Filterkerzen 3 fließt vor Beginn des Spülvorgang praktisch keine Flüssigkeit F aus den Filterkerzen 3 in die belüftete Einströmseite 4 zurück. Zudem wird vor Beginn des Spülvorgangs eine Absperrarmatur 7a in der Ablaufleitung 7 geschlossen. Der zur Reinigung der Filterkerzen 3 benötigte Druckgas- oder Druckluftanschluss 10 zweigt in diesem Ausführungsbeispiel von der Ablaufleitung 7 ab. Die Faltkerzen 3 sind zusätzlich zu deren Halterung an deren jeweiliger Oberseite durch die Halteplatte 11 an deren Unterseite durch ein Haltegitter 13 fixiert. Zur Entleerung der verschmutzten Flüssigkeit F nach dem Spülvorgang ist die Entleerungsvorrichtung 9 vorgesehen. Die zur Rückspülung der Faltkerzen 3 eingesetzte Druckluft steht mit einem Überdruck von beispielsweise 6 bar zur Verfügung. Vor der Rückspülung ist der Filterdom 12 einschließlich der Ablaufleitung 7 bis zur Absperrarmatur 7a frei von Gasblasen. Die Absperrarmatur 10a wird zur Einleitung von Druckluft beim Spülvorgang möglichst schnell geöffnet. Da im Filterdom 12 zunächst kein Gaspolster existiert, breitet sich ein Druckimpuls mit steilem Anstieg in der Flüssigkeit F, insbesondere auch in die flüssigkeitsgefüllten Filterkerzen 3 hinein, schnell aus. Die an und in den Filterkerzen 3 haftenden Verschmutzungen werden damit sehr effektiv abgesprengt.

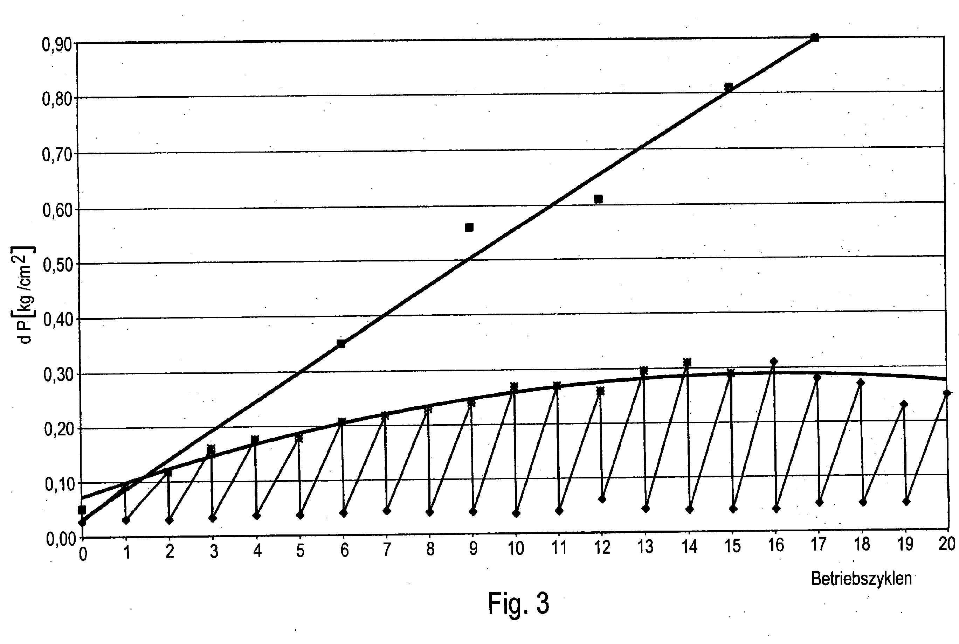

Fig. 3 zeigt in einem Diagramm die Abhängigkeit des Differenzdrucks dP zwischen dem Druck der Flüssigkeit F auf der Ausströmseite 5 des Filterkörpers 3 der in Fig. 2 dargestellten Filtereinrichtung 1 und dem Druck auf der Einströmseite 4 des Filterkörpers 3 von der Betriebsdauer. Die Betriebsdauer ist in Betriebszyklen unterteilt. Die durchgezogene, sägezahnförmige Linie beschreibt den Differenzdruck dP im Filterbetrieb, wobei der Filterkörper 3 nach jedem Betriebszyklus mit dem erfindungsgemäßen Reinigungs- oder Spülverfahren regeneriert wird. Zum Vergleich ist der zeitliche Verlauf des Differenzdruckanstieges dP bei Reinigung der Filtereinheit 1 nach einem herkömmlichen Verfahren in das Diagramm eingezeichnet (Gerade als Näherung). Das herkömmliche Filterreinigungsverfahren kommt hierbei lediglich nach jedem dritten Betriebszyklus zum Einsatz.

Während des Filterbetriebs steigt der Differenzdruck dP kontinuierlich an. Nach Beendigung des ersten Betriebszyklus findet eine Spülung oder Rückspülung bei einem bestimmten Differenzdruck dP der Filtereinheit 1 statt. Der Differenzdruck dP sinkt nach der Spülung nahezu auf den ursprünglichen Wert, der bei neuem unverschmutztem Filterkörper 3 zu messen war. Im sich anschließenden zweiten Betriebszyklus ist ebenfalls ein Anstieg des Differenzdrucks dP feststellbar, der jedoch schneller ist als der Anstieg im ersten Betriebszyklus. Auch bei weiteren Betriebszyklen wird jeweils ein schnellerer Anstieg des Differenzdrucks dP als beim vorhergehenden Betriebszyklus festgestellt. Hierbei ist der Differenzdruck dP unmittelbar nach der Rückspülung stets annähernd auf dem gleichen Niveau wie beim neuen Filterkörper 3 zu Beginn des ersten Betriebszyklus. Dies zeigt, dass durch die Rückspülung die im Filterkörper 3 gesammelten, aus der Flüssigkeit F abgeschiedenen Partikel zwar nicht vollständig, jedoch zu einem hohen Grad aus dem Filtermaterial des Filterkörpers 3 gelöst werden. Der Anstieg des Differenzdrucks dP wird nach einigen Betriebszyklen nur noch moderat steiler. Anstelle der hier durchgeführten Spülzyklen nach jeweils einem Betriebszyklus konstanter Dauer ist auch eine Reinigung des Filterkörpers 3 jeweils nach Erreichen eines als Grenzwert festgelegten Maximaldifferenzdrucks realisierbar. In diesem Fall nimmt die Dauer der einzelnen Betriebszyklen mit der Dauer der Filternutzung ab. Als Kriterium für einen notwendigen Austausch des Filterkörpers 3 ist in diesem Fall beispielsweise eine Mindestdauer eines Betriebszyklus festlegbar.

Im Gegensatz zur erfindungsgemäßen Filterspülung (durchgezogene gekrümmte Linie) treten bei Filterreinigungsverfahren nach dem Stand der Technik schon nach einer geringen Anzahl an Betriebszyklen wesentlich höhere Differenzdrücke dP auf. Der Filterkörper 3 kann daher bei Rückspülung mit dem erfindungsgemäßen Reinigungsverfahren wesentlich länger in Betrieb bleiben als im Fall einer Filterreinigung nach herkömmlichen Verfahren. Hierbei ist das erfindungsgemäße Reinigungsverfahren im Vergleich zu herkömmlichen Reinigungsverfahren selbst bei häufigerer Anwendung insgesamt nicht zeitaufwändiger. Da nur in wesentlich längeren Zeitabständen ein Filterwechsel erforderlich ist, ist insgesamt ein erhöhter Anlagennutzungsgrad bei geringeren Kosten und geringerer Abfallmenge erreichbar.

### Bezugszeichenliste

- 1: Filtereinheit
- 2: Behälter
- 3: Filterkörper
- 4: Einströmseite
- 5: Ausströmseite
- 6: Zulaufleitung
- 6a: Absperrarmatur
- 7: Ablaufleitung
- 7a: Absperrarmatur
- 8: Belüftungseinrichtung
- 8a: Absperrarmatur
- 9: Entleerungseinrichtung
- 9a: Absperrarmatur
- 10: Druckgasanschluss
- 10a: Absperrarmatur
- 11: Halteplatte
- 12: Filterdom
- 13: Haltegitter

- dP: Differenzdruck
- F: Flüssigkeit

## Patentansprüche

1. Verfahren zum Reinigen eines Filterkörpers (3) zum Filtern einer Flüssigkeit (F), der in einem Behälter (2) eine Einströmseite (4) von einer Ausströmseite (5) trennt, mit folgenden Schritten:
- Die Zufuhr der Flüssigkeit (F) auf der Einströmseite (4) wird unterbrochen,
- die Einströmseite (4) des Behälters (2) wird entleert und belüftet, wobei die Ausströmseite (5) mit Flüssigkeit (F) gefüllt bleibt,
- der Druck auf der Ausströmseite (5) wird erhöht, so dass Flüssigkeit (F) von der Ausströmseite (5) durch den Filterkörper (3) in die zunächst gasgefüllte Einströmseite (4) strömt.

2. Verfahren nach Anspruch 1,
**dadurch gekennzeichnet,**
**dass** der Druck auf der Ausströmseite (5) vor der Druckerhöhung ausschließlich durch die Gewichtskraft der auf der Ausströmseite (5) anstehenden Flüssigkeit (F) erzeugt wird.

3. Verfahren nach Anspruch 1 oder 2,
**dadurch gekennzeichnet,**
**dass** die Druckerhöhung auf der Ausströmseite (5) impulsartig erfolgt.

4. Verfahren nach Anspruch 3,
**dadurch gekennzeichnet,**
**dass** die Druckerhöhung auf der Ausströmseite (5) durch einen Druckluftimpuls erfolgt.

5. Filtereinrichtung zur Durchführung des Verfahrens nach einem der Ansprüche 1 bis 4 mit
- einem Behälter (2), in dem ein Filterkörper (3) eine Einströmseite (4) mit einer Zulaufleitung (6) von einer Ausströmseite (5) mit einer Ablaufleitung (7) trennt,
- einer Entleerungsvorrichtung (9) auf der Einströmseite (4),
- einer Belüftungsvorrichtung (8) auf der Einströmseite (4),
- einem Druckgasanschluss (10) auf der Ausströmseite (5).

6. Filtereinrichtung nach Anspruch 5,
**gekennzeichnet durch**
eine mikroporöse Ausbildung des Filterkörpers (3).

7. Filtereinrichtung nach Anspruch 5 oder 6,
**gekennzeichnet durch**
eine Filterkerze (3) als Filterkörper.

8. Filtereinrichtung nach einem der Ansprüche 5 bis 7,
**dadurch gekennzeichnet,**
**dass** die Filterkerze (3) hängend im Behälter (2) angeordnet ist.
